# DEMANDE DE BREVET EUROPEEN

(11) **EP 1 459 648 A1**
(43) Date de publication de la demande: **22.09.2004**
(21) Numéro de dépôt: 04405058.1
(22) Date de dépôt: 29.01.2004
(51) Int. Cl.: A45F 3/14, B62B 5/06

(54) **Harnais ajustable au corps humain pour dispositif de transport de fardeau**

(30) Priorité: 18.03.2003 EP 03405186
(71) Demandeur: Joncourt, François, 3084 Wabern (CH)
(72) Inventeur: Joncourt, François, 3084 Wabern (CH)
(74) Mandataire: Störzbach, Michael Andreas

(57) **Abrégé**

Le dispositif d'attache (30) comprend une ceinture (31) pourvu de moyens de liaison à un dispositif de transport de charge de sorte que ce dernier dispose, au cours et dans l'axe de la marche d'un utilisateur, d'une liberté de mouvement d'amplitude limitée. Plus particulièrement, ces moyens sont formés de lanières souples latérales (42), pendantes, dont l'extrémité supérieure est solidaire de la ceinture et auxquelles peut être suspendu le dispositif de transport à une distance voulue de la ceinture (31).

## Description

La présente invention porte sur un harnais, ou plus généralement un dispositif d'attache destiné à être revêtu par une personne et à être relié à un dispositif de transport d'un fardeau, selon le préambule de la revendication indépendante 1.

Le port d'un tel dispositif d'attache permet à l'utilisateur de tirer, tracter ou éventuellement pousser plus aisément le dispositif de transport, avec le fardeau ou la charge qui aura été préalablement placé dessus. Les domaines d'application de ces dispositifs de transport - du type de celui décrit et revendiqué par l'inventeur dans sa demande prioritaire EP-03405186.2 - et, partant, ceux des dispositifs d'attache, sont multiples, l'un d'eux, privilégié, étant celui de la randonnée.

Le problème que pose le dispositif d'attache est triple. D'abord, sur le plan de l'ergonomie, il convient d'assurer le confort d'utilisation du dispositif d'attache et le souci de soulager le dos par réduction sensible et répartition idéale des efforts à déployer lors du transport de la charge. Ensuite, selon un volet plus technique, le dispositif d'attache doit être conçu de sorte que ladite utilisation soit pratique et rationnelle. Enfin, le troisième volet du triptyque consiste à allier aux deux autres, ergonomie et technique, l'esthétique, et non pas à la leur sacrifier.

Il existe à l'heure actuelle différents genres de dispositifs d'attache allant de la simple ceinture au harnais complexe.

Ainsi, FR-A-2,775,878 divulgue un dispositif d'attache constitué d'une ceinture pourvue, à gauche et à droite, de pièces s'appuyant contre les hanches du porteur. La charge, qui repose sur une entretoise-support du chariot, comporte des bretelles que le porteur passe par ses épaules. Lors de l'utilisation, les hanches vont être continuellement soumises à une double sollicitation verticale (partie du poids de la charge reportée sur elles) et latérale (provoquée par le tangage du dispositif). Et une diminution de l'une des deux sollicitations, résultant du déplacement dans un plan horizontal de la charge, c'est-à-dire de la modification de l'emplacement de l'entretoise-support, entraînera une aggravation corrélative de l'autre sollicitation.

US-4,664,395 divulgue un dispositif de transport de charges comprenant un chariot ou châssis-support et un harnais. Le harnais se compose, d'une part, d'une paire de ceintures inférieure et supérieure disposées respectivement autour de la taille et du torse, et d'une paire de bretelles, et, d'autre part, d'une structure dorsale formée de deux tubes. Le harnais comporte en outre, notamment un étui ou plus généralement une fixation destinée à recevoir une manette de frein semblable à celle d'une bicyclette, cette manette étant reliée à la roue ou, plus précisément à un étrier portant les garnitures de frein, par un câble passant pardessus l'épaule de l'utilisateur. A ladite structure dorsale sont reliées, d'une part, les deux ceintures précitées et, d'autre part, dans sa zone supérieure, les extrémités supérieures du châssis du dispositif de transport.
Notamment le harnais est passablement complexe et lourd, donc onéreux, mais aussi inesthétique, tandis que son port s'avère pour le moins malaisé, constituant davantage un carcan, à tel point que l'utilisateur aura vite fait de l'abandonner et, avec lui, tout le dispositif.

On comprend aisément que ces dispositifs connus ne résolvent aucunement le faisceau de problèmes évoqué plus haut.

Le but de la présente invention est d'y apporter une solution optimale et palliant du coup les inconvénients affectant les dispositifs connus.

Ce but est atteint grâce aux moyens définis dans la revendication indépendante 1, les revendications dépendantes portant sur des réalisations particulières préférées et à bon compte.

Le dispositif d'attache est conçu de telle sorte qu'un basculement du dispositif de transport, lorsque le risque survient, peut être en principe évité, cela même dans des situations entraînant une rotation ou un balancement du tronc du porteur. De même, une tendance au balancement, c'est-à-dire à un mouvement d'avant en arrière lors de la marche, est quasiment annulé, ou pour le moins, l'amplitude d'un tel mouvement restera, dans le pire de cas, extrêmement limitée. En outre, le dispositif d'attache permet à l'utilisateur, dans de nombreuses situations, de garder les mains libres. Bien entendu, lorsqu'il évolue en terrain à relief prononcé, l'utilisateur peut toujours poser mains sur les poignées du dispositif, pour être prêt, à tout moment, à neutraliser une éventuelle force perturbatrice. Mais il n'éprouvera la moindre gêne pour ce faire, puisque l'exercice d'une légère impulsion vers le haut ou le bas sur les poignées du dispositif suffira. D'une part, la plus grande composante de la force créée par le poids de la charge transportée est supportée par l'élément d'appui sur le sol que comprend le dispositif de transport, tandis que l'autre composante de la force est sensiblement réduite (ce qui est commun à tous les dispositifs connus). Cette dernière, tout comme les composantes résiduelles d'éventuelles forces additionnelles provoquées par exemple par des chocs ou autres dénivellations subites de terrain, sont réparties pratiquement à parts égales à gauche et à droite de l'utilisateur, et cela essentiellement sur son bassin (dans une moindre mesure sur ses épaules, selon la forme d'exécution du dispositif d'attache), donc sans que soit sollicitée (ou alors que très faiblement) sa colonne vertébrale. Enfin, s'est avéré du plus grand intérêt le fait que le chariot, plutôt que d'être amarré fixement ou rigidement au corps du porteur (comme c'est le cas avec les harnais de l'art antérieur), garde au contraire une liberté de mouvement, c'est-à-dire une possibilité de flottement par rapport au porteur, bien entendu limitée, de par la conception et des particularités de construction des éléments composant le dispositif d'attache. Cependant, lors des très nombreuses mises en oeuvre de ce dispositif (notamment randonnées en tout terrain), on a pu observer - ce qui n'est pas étranger au succès commercial rencontré - que le chariot, en dépit de cet amarrage "flottant", demeure constamment, en cours de marche, relativement immobile par rapport au porteur, sa tendance à aller vers l'avant étant aussitôt neutralisée par sa tendance à aller en arrière, et vice versa.

Le dispositif d'attache selon l'invention offre une palette d'avantages qui se sont avérés lors de nombreux essais. Il répond aux exigences les plus drastiques des randonneurs, mais s'adresse tout aussi bien à un très large public auquel il peut être offert à un prix relativement modique, tout en se distinguant par un indice qualité / prix des plus avantageux.

On va décrire ci-après, à titre d'exemples non limitatifs, deux formes de réalisation du dispositif d'attache, cela à l'appui des dessins annexés où:
la figure 1 est une vue en perspective d'une première forme de réalisation du dispositif d'attache,
la figure 2 est une vue en perspective d'une deuxième forme de réalisation du dispositif d'attache,
la figure 3 est une représentation en perspective d'un dispositif d'attache selon l'invention relié à un dispositif de transport
   et
la figure 4 est une vue de profil montrant un utilisateur muni du dispositif d'attache auquel est relié un dispositif de transport,
étant observé que les échelles de représentation peuvent différer d'une figure à l'autre, et des éléments identiques avoir une même référence.

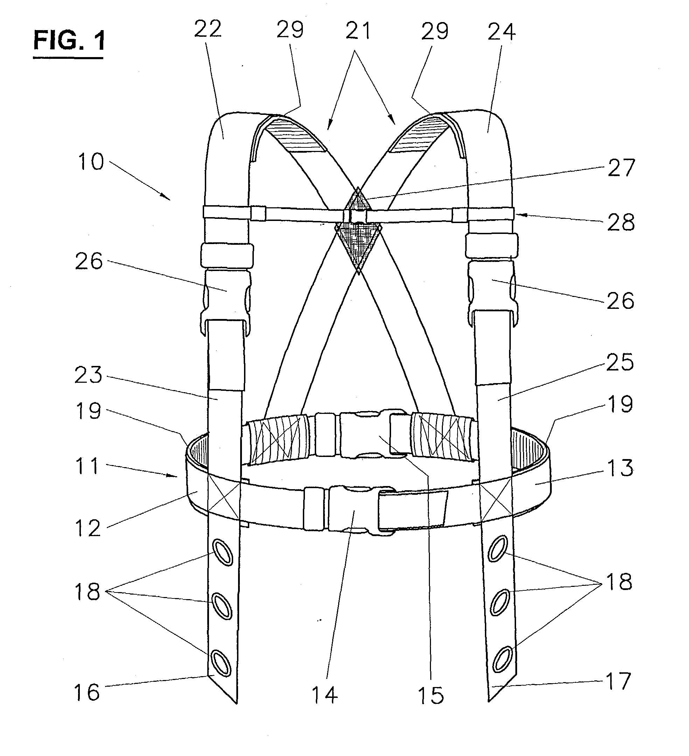

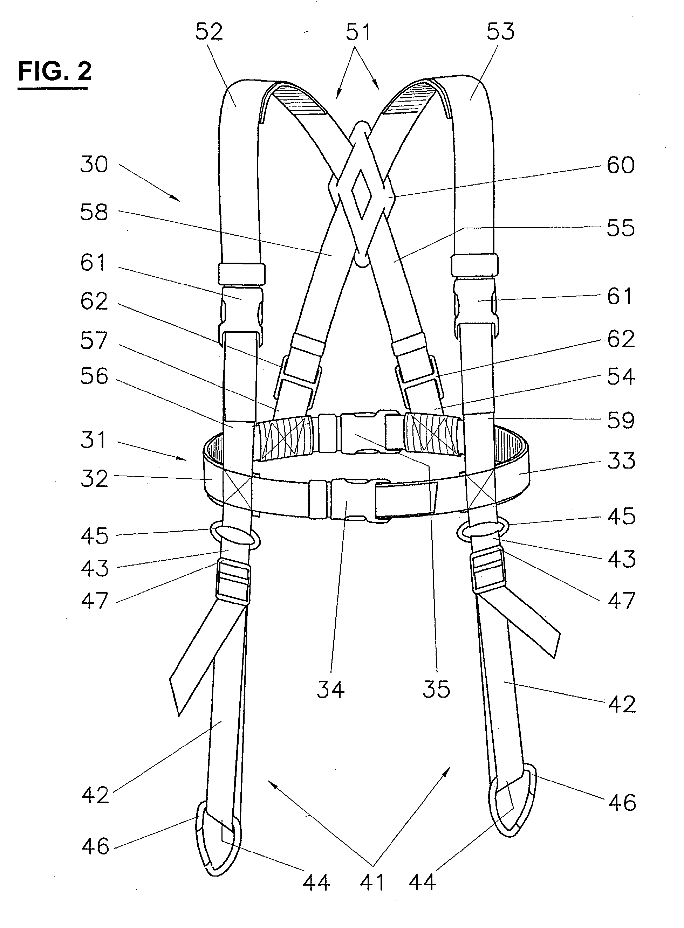

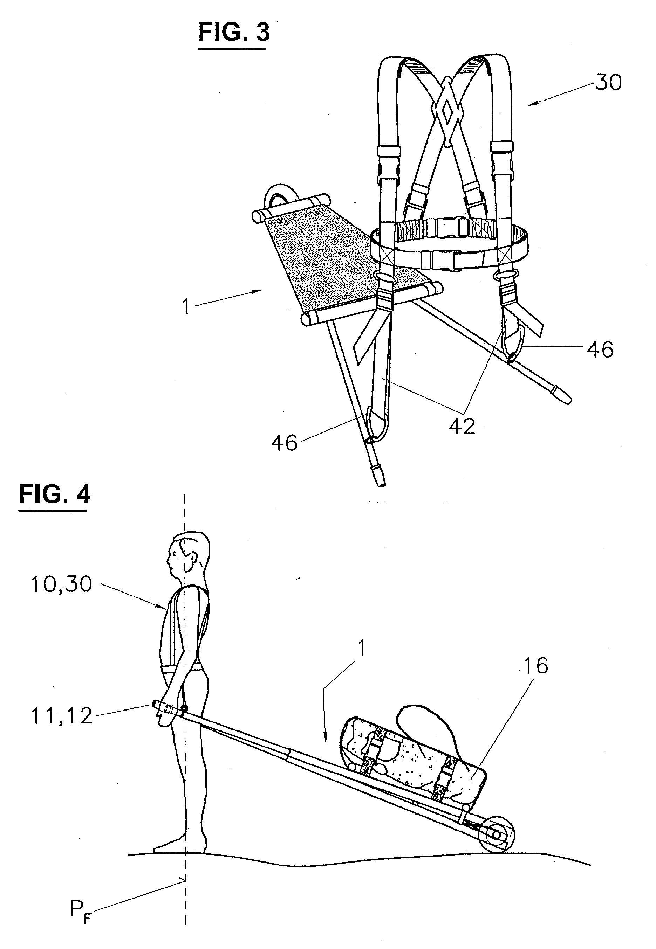

De manière générale, grâce au dispositif d'attache dont deux formes de réalisation 10; 30 sont représentées aux figures 1 et 2, tout dispositif de transport 1 (ou chariot) du genre de celui décrit dans EP-03405186.2 et représenté schématiquement aux figures 3 et 4, permet d'être tracté par un porteur, lequel peut, dans le même temps, ou bien garder les mains libres, ou, selon l'ajustement effectué (voir infra), les poser sur des poignées 11, 12 que comporte le chariot 1, ou bien encore, en tout état de cause, saisir ces dernières instantanément et rapidement, lorsque la situation l'exige, par exemple à raison du relief du terrain. De fait, le chariot peut être relié au dispositif d'attache de telle manière que lesdites poignées se trouvent à une hauteur désirée, et à plus ou moins grande proximité des mains du porteur lorsque celui-ci a les bras le long de son corps (figure 4).

Le dispositif d'attache 10 selon le premier exemple d'exécution représenté à la figure 1 comprend une ceinture 11 comportant une paire de lanières latérales 16, 17, pendantes et libres, constitutive d'un dispositif d'accrochage. Ces lanières sont pourvues d'une série d'oeillets 18 disposés à différentes distances de la ceinture (donc à différentes hauteurs par rapport au sol), chaque lanière en comportant trois, selon l'exemple. La ceinture elle-même est formée d'un brin droit 12 et d'un brin gauche 13 reliés entre eux à l'avant et à l'arrière par des boucles 14, 15 respectivement, ces dernières permettant une variation du diamètre, c'est-à-dire un ajustement correct au tour de taille du porteur et une fixation rapide, avec le serrage désiré. Selon l'exemple, la boucle avant 14 est du type connu à enclipsage d'une pièce mâle dans une pièce femelle, tandis que la boucle arrière 15 est du type courant à double traverse, l'une des traverses retenant l'un des brins pour le rendre solidaire de la boucle, l'autre traverse étant prévue pour laisser passer autour d'elle l'autre brin en vue de l'ajustement à la bonne longueur et le serrage. Bien entendu, toutes autres variantes sont possibles (en particulier, celle de prévoir à l'arrière une boucle 15 qui soit du même type que la boucle 14). Par ailleurs, selon une version simplifiée, la boucle arrière 15 pourrait être supprimée, de sorte que l'on aurait une ceinture simple à serrage et fermeture à l'avant seulement. Toutefois, le double ajustage arrière / avant présente l'avantage pour l'utilisateur de pouvoir, après avoir disposé la ceinture 11 autour de sa taille, placer les lanières 16, 17 très exactement aux endroits qu'il estime idéaux pour lui. Bien entendu, apparaît idéal, en principe, un positionnement tel que les lanières soient latéralement dans l'alignement des têtes de fémurs du porteur (cf. Figure 4). Enfin, tout ou partie du pourtour intérieur de la ceinture 11 peut être rembourré. A titre d'exemple, selon l'exécution représentée à la figure 1, des rembourrages 19 sont prévus à droite et à gauche respectivement.

Après mise en place correcte de la ceinture 11 autour de sa taille, l'utilisateur peut accrocher le chariot 1 aux lanières à l'aide d'éléments d'accrochage, avantageusement des mousquetons (non représentés sur la figure 1). C'est-à-dire qu'après avoir fait passer un mousqueton dans l'un des oeillets 18 (qu'il choisit) de chacune des lanières 16, 17, il relie chacun des deux mousquetons à un anneau correspondant solidaire du chariot (comme cela se dégage de la figure 3).

Est en outre reliée à la ceinture 11, selon une exécution préférée, une paire de bretelles 21 à brins croisés à l'arrière. Les brins de droite sont formés eux-mêmes de deux brins ou parties 22, 23 et 24, 25, respectivement. Selon l'exemple représenté, lesdits brins sont, à l'endroit de leur croisement 27, cousus l'un à l'autre, l'ensemble {ceinture - bretelles} formant un genre de harnais grâce auquel le confort et l'efficacité lors de la traction du chariot 1 sont sensiblement améliorés. A l'avant, les deux parties de chacun des brins peuvent être rattachées entre elles au moyen de boucles 26 (de préférence identiques à la boucle 14 ou du même type que celle-ci) permettant un ajustage aisé à la morphologie de l'utilisateur et une fermeture rapide. Selon une variante, les brins 23, 25 pourraient être supprimés, auquel cas il conviendrait d'adapter en longueur les brins 22, 24, l'une de pièces de chaque boucle 26 (de préférence femelle) étant alors directement rapportée au brin respectif 12, 13 de la ceinture. Enfin, tout ou partie des faces intérieures des bretelles 21, plus particulièrement des brins 22, 24, est avantageusement rembourré. A titre d'exemple, selon l'exécution représentée à la figure 1, des rembourrages 29 sont prévus aux endroits où lesdits brins sont en contact avec les épaules de l'utilisateur.

Selon une variante, un bon maintien des brins 22, 24 de la bretelle peut être assuré grâce à une sangle de poitrine transversale 28 les reliant l'un à l'autre. Cette sangle présente, de préférence dans la zone médiane, une boucle (non référencée) en vue d'un ajustage et d'une fixation rapides.

On observe que le brin 23 et la lanière 16, d'une part, et le brin 25 et la lanière 17, d'autre part, sont reliés à la ceinture 11 avantageusement dans une même zone, de sorte à s'étendre chaque fois dans le prolongement l'un de l'autre.

Une deuxième forme d'exécution 30 du dispositif d'attache, montrée à la figure 2, est similaire à la première forme d'exécution 10. Elle en diffère toutefois par certains moyens qui rendent l'utilisation du dispositif plus pratique et plus confortable encore. On se limitera donc à ne présenter ci-après, essentiellement, que lesdits moyens, le lecteur pouvant au besoin se reporter à la description de la forme d'exécution 10.

Le dispositif 30 se présente sous forme de harnais comprenant une ceinture 31 pourvue d'un dispositif d'accrochage 41, et une paire de bretelles 51.

Les deux brins droit et gauche 32, 33 de la ceinture 31 sont réunis à l'avant et à l'arrière par des boucles 34, 35 qui sont ici identiques et du même type que la boucle 14 de la ceinture 11, ce qui rend l'ajustage et le serrage plus rapide et plus aisé. Le dispositif d'accrochage 41 est formé d'une paire de lanières pendantes droite - gauche. Chaque lanière comprend une bande 42 retenue par sa partie supérieure 43 à la ceinture 31 par l'intermédiaire d'un anneau 45, présente à sa partie inférieure une boucle 44 retenant un mousqueton 46 destiné à être relié à un anneau ou tout autre moyen équivalent solidaire du chariot 1 et comporte, enfin, une boucle 47 permettant à l'utilisateur de régler en hauteur la position dudit mousqueton et d'assurer le maintien du réglage effectué. On comprend aisément que ce réglage (à la différence de celui existant sur la première forme d'exécution, où les positions en hauteur du mousqueton sont discrètes et dictées par le nombre nécessairement limité d'oeillets 18), est continu, à l'intérieur d'un intervalle entre une hauteur minima et une hauteur maxima relativement grand, en fonction de la longueur de la bande 42, et peut par conséquent être parfaitement et idéalement adapté à la morphologie de l'utilisateur et / ou aux souhaits particuliers de ce dernier quant au positionnement des poignées 11, 12 du chariot.

La paire de bretelles 51 comporte deux brins 52, 53. Le brin 52 se compose de trois parties de brin 54, 55, 56. Le brin central 55 est relié, à l'avant, au brin 56 par l'intermédiaire d'une boucle 61 permettant un réglage en longueur et un serrage rapides et, à l'arrière au brin 54 par l'intermédiaire d'une boucle 62 permettant également un réglage en longueur et un serrage. Les brins 54, 56 sont par ailleurs reliés à la ceinture 31. Le brin 53 se compose de trois parties de brin 57, 58, 59 et est retenu à la ceinture 31 de manière analogue à celle que l'on vient de voir pour le brin 52. Les brins 52, 53, se croisent à l'arrière en passant par une fine plaquette de croisement 60, ce qui évite de les rendre solidaires.

A l'instar de ce que l'on a vu à propos de la réalisation 10, on peut également prévoir ici, pour un bon maintien des brins 52, 53 peut être assuré grâce à une sangle de poitrine transversale 28 (non représentée à la figure 2).

La figure 3 montre un harnais 30, c'est-à-dire selon la deuxième forme d'exécution, relié à un chariot 1 également conçu par l'inventeur (uniquement à but d'illustration, les réglages des bandes 42 diffèrent sensiblement l'un de l'autre (la bande gauche est plus rapprochée de la ceinture que ne l'est la bande droite).

Le dispositif d'attache selon l'invention, de préférence élaboré en matière synthétique résistante et souple, est léger, d'un port agréable et non constitutif de contraintes pour l'utilisateur. Grâce aux réglages qu'il permet, il est adaptable idéalement, aussi bien objectivement à toute morphologie humaine que subjectivement aux préférences de chaque utilisateur. Plus particulièrement, la figure 4 montre que les points d'accrochage du harnais au chariot 1, c'est-à-dire les points de contact des mousquetons avec les anneaux d'accrochage solidaires du chariot, se situent au moins approximativement dans un plan P_{F} (figure 4), ce plan étant formé par les axes des fémurs droit et gauche de l'utilisateur. Le dispositif d'attache, permettant à l'utilisateur de faire corps avec le chariot, lequel évolue au même rythme que lui, sans à-coups, alors même que ledit chariot dispose pourtant, potentiellement, d'une liberté de mouvement vers l'avant et l'arrière en cours de marche par rapport audit utilisateur, constitue un véritable interface de compensation harmonieux (grande liberté de mouvements pour l'utilisateur, répartition idéale des sollicitations agissant sur ce dernier, liberté de mouvement (limité, dans l'axe de la marche) pour le chariot). Aussi ce dispositif d'attache permet de tracter efficacement, et avec un maximum d'aisance et de facilité, le chariot 1 muni de sa charge 16, les composantes de forces - se situant pour partie au niveau du bassin de l'utilisateur et pour partie au niveau des bretelles, lorsque le dispositif d'attache en est pourvu, conformément aux exécutions préférées - ne sollicitant pas le dos de ce dernier, tandis qu'il concourt au maintien de l'équilibre du dispositif de transport.

## Revendications

1. Dispositif d'attache comprenant une ceinture et destiné à être revêtu par un utilisateur, ce dispositif étant pourvu de moyens permettant de le relier à dispositif de transport de charge, **caractérisé en ce que** lesdits moyens ménagent audit dispositif de transport, au cours et dans l'axe d'avancement, une liberté de mouvement d'amplitude limitée.

2. Dispositif d'attache selon la revendication 1, **caractérisé en ce que** lesdits moyens sont formés de lanières latérales pendantes dont l'extrémité supérieure est solidaire de la ceinture et auxquelles peut être suspendu le dispositif de transport.

3. Dispositif d'attache selon la revendication 2, **caractérisé en ce que** la ceinture est pourvue de moyens permettant un ajustement desdites lanières à des positions déterminées.

4. Dispositif d'attache selon la revendication 3, **caractérisé en ce que** les moyens d'ajustement sont constitués de deux boucles disposées de préférence, l'une à l'arrière, l'autre à l'avant de l'utilisateur, ces boucles pouvant dans le même temps exercer une fonction de serrage de la ceinture autour de la taille de ce dernier.

5. Dispositif d'attache selon l'une des revendications 2 à 4, **caractérisé en ce que** les lanières de traction comportent des moyens d'ajustement d'ancrage permettant d'ancrer le chariot à une distance choisie de la ceinture.

6. Dispositif d'attache selon la revendication 5, **caractérisé en ce que** les moyens d'ajustement d'ancrage sont discrets, chaque lanière comportant de préférence une série d'oeillets pouvant recevoir un moyen de liaison tel que mousqueton.

7. Dispositif d'attache selon la revendication 5, **caractérisé en ce que** les moyens d'ajustement d'ancrage sont continus, chaque lanière comportant une boucle permettant d'en régler la longueur d'assurer le maintien de cette longueur, l'extrémité inférieure de la lanière formant une anse pouvant recevoir un moyen de liaison tel que mousqueton.

8. Dispositif d'attache selon l'une des revendications 1 à 7, **caractérisé en ce que** des bretelles sont reliées à la ceinture de sorte à former avec cette dernière un harnais.

9. Dispositif d'attache selon la revendication 8, **caractérisé en ce que** chaque brin de bretelle comporte au moins un moyen d'ajustage au corps et de serrage, de préférence deux, l'un à l'avant, l'autre à l'arrière, et que le brin droit croise le brin gauche à l'arrière.

10. Dispositif d'attache selon la revendication 8 ou 9, **caractérisé en ce que** les brins de brettelle sont retenus à l'avant par une sangle de poitrine.
